# EUROPEAN PATENT APPLICATION

(11) **EP 4 542 597 A1**
(43) Date of publication of application: **23.04.2025**
(21) Application number: 24203198.7
(22) Date of filing: 27.09.2024
(51) Int. Cl.: H01G 4/012, H01G 4/12, H01G 4/008, H01G 4/30, H01G 4/232

(54) **MULTILAYERED CERAMIC CAPACITOR**

(30) Priority: 16.10.2023 KR 20230137748
(71) Applicant: Samsung Electro-Mechanics Co., Ltd., Gyeonggi-do (KR)
(72) Inventor: Lee, Chang Min, Suwon-si, Gyeonggi-do (KR); Kang, Seong Gu, Suwon-si, Gyeonggi-do (KR); Song, Gyeong Ju, Suwon-si, Gyeonggi-do (KR); Park, Sang Eon, Suwon-si, Gyeonggi-do (KR); Kang, Sung Hyung, Suwon-si, Gyeonggi-do (KR); Lim, Hyun Min, Suwon-si, Gyeonggi-do (KR)
(74) Representative: Grünecker Patent- und Rechtsanwälte PartG mbB

(57) **Abstract**

A multilayer electronic component may include: a body including a dielectric layer and internal electrodes alternately disposed in a first direction; and an external electrode disposed on the body and connected to the internal electrode, wherein the internal electrode may include a plurality of electrode portions and disconnection portions, and the disconnection portion may include at least one of a dielectric and a pore.

## Description

### CROSS-REFERENCE TO RELATED APPLICATION(S)

This application claims benefit of priority to Korean Patent Application No. 10-2023-0137748 filed on October 16, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser mounted on the printed circuit boards of various types of electronic product, such as image display devices including a liquid crystal display (LCD) and a plasma display panel (PDP), computers, smartphones and mobile phones, serving to charge or discharge electricity therein or therefrom.

The multilayer ceramic capacitor may be used as a component in various electronic devices due to having a small size, ensuring high capacitance and being easily mounted.

Since ceramics are highly brittle, cracks may occur during mounting or use of a multilayer ceramic capacitor. Additionally, there may be a concern that cracks may be generated or propagated during a sintering process of manufacturing a multilayer ceramic capacitor.

Accordingly, there is need for a method for suppressing generation and propagation of cracks in a multilayer ceramic capacitor.

### SUMMARY

An aspect of the present disclosure is to provide a multilayer electronic component having excellent reliability.

An aspect of the present disclosure is to provide a multilayer electronic component in which generation and propagation of cracks are suppressed.

However, the aspects of the present disclosure are not limited to the above-described contents, and may be more easily understood in the process of describing specific embodiments of the present disclosure.

According to an aspect of the present disclosure, a multilayer electronic component may include: a body including a dielectric layer and internal electrodes alternately disposed in a first direction, and including first and second surfaces opposing each other in a first direction, third and fourth surfaces connected to the first and second surfaces and opposing each other in a second direction, and fifth and sixth surfaces connected to the first to fourth surfaces and opposing each other in a third direction; and an external electrode disposed on the body and connected to the internal electrode, wherein the internal electrode may include a plurality of electrode portions and disconnection portions, and the disconnection portion may include at least one of a dielectric and a pore, and when a ratio of a length of the pore to a length of the disconnection portion is referred to as a porosity of the disconnection portion, a porosity of the disconnection portion measured in a central portion of the internal electrode in the third direction, in cross-sections of the body in the first and third directions, is referred to as Dc, and a porosity of the disconnection portion measured in an end of the internal electrode in the third direction is referred to as Dm, Dm/Dc may be less than 0.79.

According to an aspect of the present disclosure, a multilayer electronic component may include: a body including a dielectric layer and internal electrodes alternately disposed in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in the third direction; and an external electrode disposed on the body and connected to the internal electrode, wherein the internal electrode may include a plurality of electrode portions and a disconnection portion, and the disconnection portion may include at least one of a dielectric and a pore, and when a ratio of a length of the pore to a length of the disconnection portion is referred to as a porosity of the disconnection portion, a porosity of the disconnection portion measured in a central portion of the internal electrode in the third direction, in cross-sections of the body in the first and third directions, is referred to as Dc, and a porosity of the disconnection portion measured in an end of the internal electrode in the third direction is referred to as Dm, the Dm may be 40% or less, and Dm<Dc may be satisfied.

As one of various effects of the present disclosure, the porosity of the disconnection portion of the internal electrodes may be controlled to suppress the occurrence and propagation of cracks.

However, advantages and effects of the present disclosure are not limited to the above-described contents, and may be more easily understood in the process of describing specific embodiments of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a schematic cross-sectional view taken along line I-I' of FIG. 1;
FIG. 3 is a schematic cross-sectional view of II-II' of FIG. 1;
FIG. 4 is an exploded view schematically illustrating a body;
Fig. 5 schematically illustrates an enlarged internal electrode;
FIG. 6 is an image obtained by observing a central portion of an internal electrode of an inventive example (sample number 7) in a third direction;
FIG. 7 is an image obtained by observing an end of an internal electrode of an inventive example (sample number 7) in a third direction;
FIG. 8 is an image obtained by observing a central portion of an internal electrode of a comparative example (sample number 1) in a third direction; and
FIG. 9 is an image obtained by observing an end of an internal electrode of a comparative example (sample number 1) in a third direction.

### DETAILED DESCRIPTION

Hereinafter, some embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

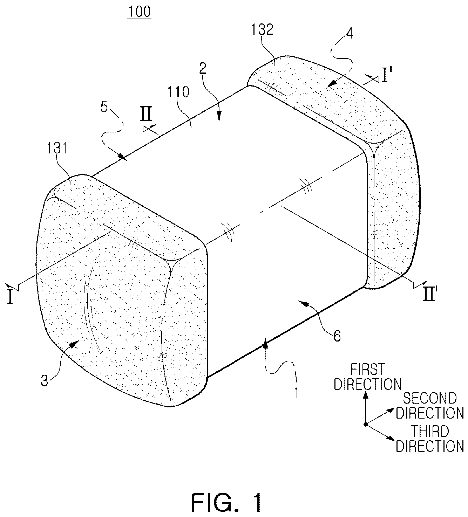

FIG. 1 is a perspective view schematically illustrating a multilayer electronic component according to an example embodiment of the present disclosure.

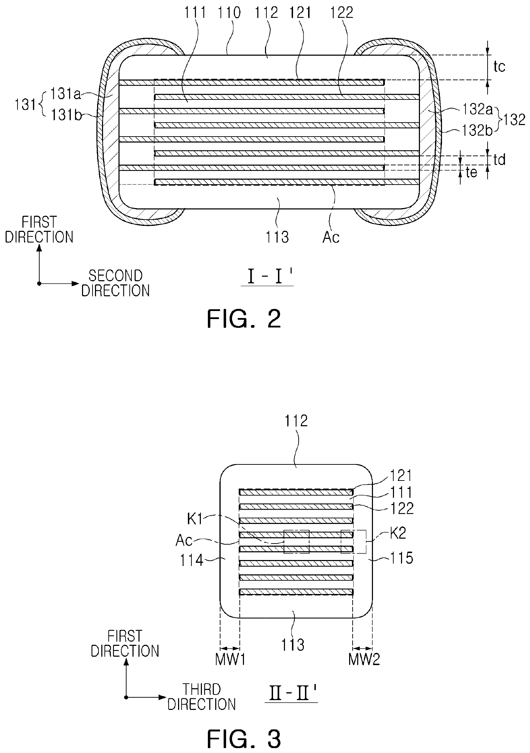

FIG. 2 is a schematic cross-sectional view taken along line I-I' of FIG. 1.

FIG. 3 is a schematic cross-sectional view of II-II' of FIG. 1.

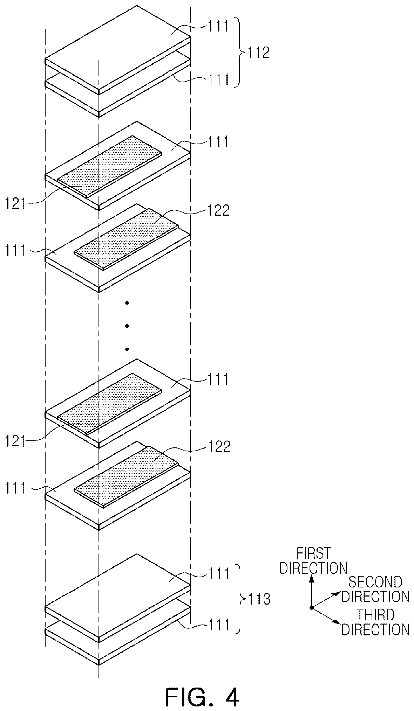

FIG. 4 is an exploded view schematically illustrating a body.

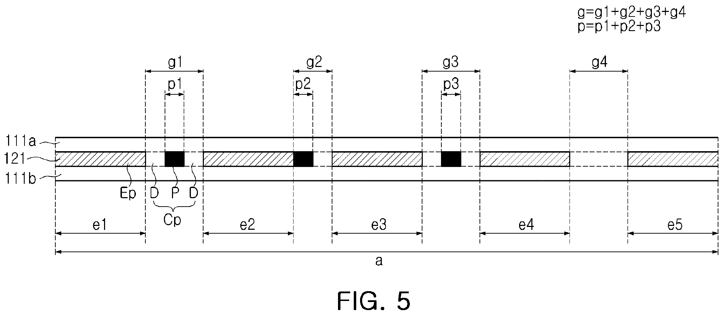

Fig. 5 schematically illustrates an enlarged internal electrode.

Hereinafter, a multilayer electronic component 100 according to some example embodiments of the present disclosure will be described in detail with reference to FIGS. 1 to 5. Additionally, as an example of a multilayer electronic component, a multilayer ceramic capacitor (hereinafter referred to as 'MLCC') will be described, but the present disclosure is not limited thereto, and the multilayer electronic component 100 may also be applied to various multilayer electronic components using ceramic materials, such as an inductor, a piezoelectric element, a varistor, or a thermistor.

The multilayer electronic component 100 according to some example embodiments of the present disclosure may include a body 110 including a dielectric layer 111 and internal electrodes 121 and 122 alternately disposed in a first direction, and including first and second surfaces 1 and 2 opposing each other in a first direction, third and fourth surfaces 3 and 4 connected to the first and second surfaces and opposing each other in a second direction, and fifth and sixth surfaces 5 and 6 connected to the first to fourth surfaces and opposing each other in a third direction; and external electrodes 131 and 132 disposed on the body and connected to the internal electrodes, and the internal electrodes may include a plurality of electrode portions Ep and a disconnection portion Cp, and the disconnection portion may include at least one of a dielectric D or a pore P.

In some example embodiments, when the disconnection portion includes both the dielectric D and the pore P, and a ratio of a length of the pore P to a length of the disconnection portion Cp is referred to as a porosity of the disconnection portion, a porosity of the disconnection portion measured in a central portion of the internal electrode in the third direction, in cross-sections of the body in the first and third directions, is referred to as Dc, and a porosity of the disconnection portion measured in an end of the internal electrode in the third direction is referring to Dm, Dm/Dc may be less than 0.79.

In some example embodiments, the ratio of the length of the pore P to the length of the disconnection portion Cp is referred to as the porosity of the disconnection portion, the porosity of the disconnection portion measured in a central portion of the internal electrode in the third direction, in the cross-sections of the body in the first and third directions, is referred to as Dc, and the porosity of the disconnection portion in the end of the internal electrode in the third direction is referred to as Dm, the Dm may be 40% or less, and Dm<Dc may be satisfied.

In the present disclosure, in a process of manufacturing a multilayer electronic component, the generation and propagation of cracks are attempted to be suppressed by fundamentally understanding a plastic behavior and crack generation mechanism.

For cracks to be formed in the body or for the cracks to increase and lead to destruction, there must be microcracks inside the body, and there must be energy to grow these microcracks. Pores existing in the disconnection portion of the internal electrode may act as microcracks inside the body. In the present disclosure, the porosity of the disconnection portion of the internal electrodes may be controlled to suppress the generation and propagation of cracks. Specifically, the pores formed in the end of the internal electrode may be serve as a starting point of cracks and, in the present disclosure, formation of pores in the end of the internal electrode may be suppressed, so that the generation and propagation of the cracks may be suppressed by fundamentally removing the cause of crack generation.

Hereinafter, each configuration included in the multilayer electronic component 100 according to some example embodiments of the present disclosure will be described.

The body 110 may include dielectric layers 111 and internal electrodes 121 and 122 alternately stacked.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with a complete straight line, but may have a substantially hexahedral shape.

The body 110 may include first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4 and opposing each other in a third direction.

As margin regions in which the internal electrodes 121 and 122 are not disposed overlap on the dielectric layer 111, a step portion due to a thickness of the internal electrodes 121 and 122 may occur, so that a corner connecting the first surface and the third to fifth surfaces and/or a corner connecting the second surface and the third to fifth surfaces may have a shape contracted toward a center of the body 110 in the first direction when viewed from the first surface or the second surface. Alternatively, due to the contraction behavior during the sintering process of the body, a corner connecting the first surface 1 and the third to sixth surfaces 3, 4, 5 and 6 and/or a corner connecting the second surface 2 and the third to sixth surfaces 3, 4, 5 and 6 may have a shape contracted toward a center of the body 110 in the first direction when viewed from the first surface or the second surface. Alternatively, in order to prevent chipping defects, and the like, the corners connecting each surface of the body 110 may be rounded by performing a separate process, so that the corner connecting the first surface and the third to sixth surfaces and/or the corner connecting the second surface and the third to sixth surfaces may have a round shape.

Meanwhile, in order to suppress a step portion caused by the internal electrodes 121 and 122, the internal electrodes after stacking may be cut to be exposed to the fifth and sixth surfaces 5 and 6 of the body, and when forming margin portions 114 and 115 by stacking a single dielectric layer or two or more dielectric layers on both surfaces of a capacitance formation portion Ac in the third direction (width direction), a portion connecting the first surface to the fifth and sixth surfaces and a portion connecting the second surface to the fifth and sixth surfaces may not have a contracted shape.

In a state in which a plurality of dielectric layers 111 included in the body 110 are sintered, boundaries between adjacent dielectric layers 111 may be so integrated so as to be difficult to identify without using a scanning electron microscope (SEM). The number of stacked dielectric layers is not particularly limited and may be determined in consideration of the size of the multilayer electronic component. For example, the body may be formed by stacking 400 or more dielectric layers.

The dielectric layer 111 may be formed by producing a ceramic slurry including ceramic powder particles, an organic solvent and a binder, applying and drying the slurry on a carrier film to prepare a ceramic green sheet, and then sintering the ceramic green sheet. The ceramic powder particles are not particularly limited as long as sufficient electrostatic capacitance may be obtained, but for example, barium titanate-based (BaTiO₃)-based powder particles and CaZrO₃-based phase dielectric powder particles may be used as the ceramic powder particles. For more specific examples, the barium titanate-based (BaTiO₃)-based powder particles may be at least one selected from the group consisting of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), and Ba(Ti_{1-y}Zr_{y})O₃ (0<y<1), and the CaZrO₃-based phase dielectric powder particles may be (Ca₁₋ₓSrₓ)(Zr_{1-y}Ti_{y})O₃ (0<x<1, 0<y<1) .

Accordingly, the dielectric layer 111 may include at least one selected from the group consisting of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), Ba(Ti_{1-y}Zr_{y})O₃ (0<y<1) and (Ca₁₋ₓSrₓ)(Zr_{1-y}Ti_{y})O₃ (0<x<1, 0<y<1). In some example embodiments, the dielectric layer 111 may include (Ca₁₋ₓSrₓ)(Zr_{1-y}Ti_{y})O₃ (0<x<1, 0<y<1) as a main component.

An average thickness td of the dielectric layer 111 in the first direction is not particularly limited, but may be, for example, 2.5 µm or less. Additionally, the average thickness td of the dielectric layer 111 in the first direction may be arbitrarily set depending on desired characteristics or purposes.

Here, the average thickness td of the dielectric layer 111 may refer to a first directional size of the dielectric layer 111 disposed between the internal electrodes 121 and 122. The average thickness of the dielectric layer 111 may be measured by scanning first and second directional cross-sections of the body 110 with a scanning electron microscope (SEM) of 10,000X magnification. More specifically, an average value may be measured by measuring the thickness at multiple areas of one dielectric layer 111, for example, 30 areas in which are spaced apart from each other at equal intervals in the second direction. The 30 areas with the equal intervals may be designated in the capacitance formation portion Ac to be described below. Additionally, when the average value is measured by extending an average value measurement up to 10 dielectric layers 111, an average thickness of the dielectric layers 111 may be further generalized.

The body 110 may include a capacitance formation portion Ac disposed inside the body 110 and configured to form a capacitance by including a first internal electrode 121 and a second internal electrode 122 disposed to face each other with the dielectric layer 111 interposed therebetween, and cover portions 112 and 113 formed above and below the capacitance formation portion Ac in the first direction.

Additionally, the capacitance formation portion Ac is a portion that contributes to forming the capacitance of a capacitor, and may be formed by repeatedly stacking a plurality of first and second internal electrodes 121 and 122 with a dielectric layer 111 interposed therebetween.

The cover portions 112 and 113 may include an upper cover portion 112 disposed above and adjacent to the capacitance formation portion Ac in the first direction, and a lower cover portion 113 disposed below and adjacent to the capacitance formation part Ac in the first direction.

The upper cover portion 112 and the lower cover portion 113 may be formed by stacking a single dielectric layer or two or more dielectric layers in a thickness direction on upper and lower surfaces of the capacitance formation portion Ac, respectively, and may basically serve to prevent damage to the internal electrode due to physical or chemical stress.

The upper cover portion 112 and the lower cover portion 113 do not include internal electrodes and may include the same material as the dielectric layer 111.

That is, the upper cover portion 112 and the lower cover portion 113 may include a ceramic material, for example, a barium titanate (BaTiO₃)-based ceramic material.

Meanwhile, a thickness of the cover portions 112 and 113 does not need to be particularly limited. However, in order to more easily achieve miniaturization and high capacitance of the multilayer electronic component, the thickness of the cover portions 112 and 113 in the first direction may be 15 µm or less.

An average thickness tc of the cover portions 112 and 113 may refer to a first directional size, and is a value obtained by averaging first directional sizes of the cover portions 112 and 113 measured at five areas spaced apart from each other by an equal interval in an upper portion or a lower portion of the capacitance formation portion Ac.

Additionally, the margin portions 114 and 115 may be disposed on a side surface of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in a width direction.

As illustrated in FIG. 3, the margin portions 114 and 115 may refer to regions between both ends of the first and second internal electrodes 121 and 122 and a boundary surface of the body 110 in a cross-section obtained by cutting the body 110 in a width-thickness (W-T) direction.

The margin portions 114 and 115 may basically serve to prevent damage to the internal electrodes due to physical or chemical stress.

The margin portions 114 and 115 may be formed by forming internal electrodes by applying a conductive paste on a ceramic green sheet except for regions in which the margin portion is to be formed.

Additionally, in order to suppress a step portion caused by the internal electrodes 121 and 122, the internal electrode after stacking may be cut to be exposed to the fifth and sixth surfaces 5 and 6 of the body, and then, the margin portions 114 and 115 may be formed by stacking a single dielectric layer or two or more dielectric layers on both side surfaces of the capacitance formation portion Ac in the third direction (width direction).

Meanwhile, a width of the margin portions 114 and 115 in the third direction is not particularly limited. However, in order to more easily achieve miniaturization and high capacitance of the multilayer electronic component, an average width of the margin portions 114 and 115 may be 15 µm or less.

The average width of the margin portions 114 and 115 may refer to an average size MW1 of a region in which the internal electrode is spaced from the fifth surface, in the third direction, and an average size MW2 of a region in which the internal electrode is spaced from the sixth surface, in the third direction, and may be an average value obtained by averaging third directional sizes of the margin portions 114 and 115 measured at five areas spaced apart from each other by an equal interval on the side surface of the capacitance formation portion Ac.

Accordingly, in some example embodiments, each of the average sizes MW1 and MW2 of the regions in which the internal electrodes 121 and 122 are spaced apart from the fifth and sixth surfaces, in the third direction, may be 15 µm or less.

The internal electrodes 121 and 122 may include a plurality of electrode portions Ep and disconnection portions Cp, and the disconnection portion Cp may include at least one of a dielectric D and a pore P.

Because a conductive paste for internal electrodes and a ceramic green sheet have different contraction initiation temperatures, clumping or disconnection phenomenon of the internal electrode may occur after a sintering process. Accordingly, when observing a cross-section obtained by cutting the body 110 in a stacking direction after the sintering process, the disconnection portion Cp, which is a portion in which a connection between the internal electrodes 121 and 122 is broken, may be observed.

Generally, the disconnection portion Cp of the internal electrode may be formed by the pores P, and the pores P may act as microcracks inside the body and may cause the generation and propagation of cracks. In the present disclosure, a porosity of the disconnection portion Cp of the internal electrode may be controlled by filling the disconnection portion Cp with the dielectric D, thereby suppressing the generation and propagation of cracks.

In some example embodiments, the ratio of the length of the pore P to the length of the disconnection portion Cp is referred to as the porosity of the disconnection portion, a porosity of the disconnection portion measured in the central portion of the internal electrode in the third direction in the cross-sections of the body in the first and third directions is referred to as Dc, and a porosity of the disconnection portion measured in the end of the internal electrode in the third direction is referred to as Dm, Dm/Dc may be less than 0.79.

Because the pore P existing in the end of the internal electrode in the third direction may act as a starting point of cracks, the porosity Dm of the disconnection portion measured in the end of the internal electrode in the third direction may be controlled to less than 0.79 as compared to the porosity Dc of the disconnection portion measured in the central portion of the internal electrode in the third direction, thereby fundamentally suppressing the cause of crack generation and suppressing the generation and propagation of cracks. Accordingly, Dm/Dc may be, preferably, less than 0.79, and, more preferably, 0.51 or less. On the other hand, a lower limit of Dm/Dc does not need to be particularly limited, and for example, Dm/Dc may be 0.26 or more.

In an example embodiment, the porosity Dm of the disconnection portion measured in the end of the internal electrode in the third direction may be 40% or less, and Dm<Dc may be satisfied. Accordingly, the cause of crack generation may be fundamentally suppressed and the generation and propagation of cracks may be suppressed.

In an example embodiment, the porosity Dm of the disconnection portion measured in the end of the internal electrode in the third direction may be 40% or less.

When Dm is more than 40%, because the cracks may be easily generated, Dm may be, preferably, 40% or less, and Dm may be, more preferably, 19% or less.

The lower limit of Dm does not need to be particularly limited, and may be, most preferably, 0%, but it may be difficult to control Dm to 0% in the manufacturing process. Therefore, the lower limit of Dm may be, for example, 5% or more, or 9% or more.

In an example embodiment, the porosity Dc of the disconnection portion measured in the central portion of the internal electrode in the third direction may be 43% or less. Although the influence on the generation and suppression of cracks is less than that of the end of the internal electrode third direction, but because the central portion of the internal electrode in the third direction may also be the starting point of cracks, Dc may be, preferably, 43% or less.

A lower limit of Dc does not need to be particularly limited, and may be, most preferably, 0%, but it may be difficult to control DC to 0% during the manufacturing process. Accordingly, the lower limit of Dc may be, for example, 20% or more, or 27% or more.

FIG. 5 is a schematic enlarged view of the internal electrode 121. Hereinafter, referring to FIG. 4, the internal electrode of the present disclosure will be described in detail focusing on the first internal electrode 121, which may be applied to the second internal electrode 122.

In an example embodiment, the disconnection portion Cp may be disposed to penetrate through the internal electrodes 121 and 122 in the first direction. When the disconnection portion Cp is disposed to penetrate through the internal electrodes 121 and 122 in the first direction, the cracks may be more easily generated, and thus, when the disconnection portion Cp is disposed to penetrate through the internal electrodes 121 and 122 in the first direction, the effect of suppressing the generation and propagation of the cracks of the present disclosure may be more remarkable.

In some example embodiments, the dielectric D may be disposed to connect the dielectric layers 111a and 111b adjacent to the disconnection portion Cp. Accordingly, by improving bonding force between the dielectric layers 111a and 111b, the strength of the multilayer electronic component may be improved, delamination and cracking may be suppressed, and moisture resistance reliability may be improved.

In some example embodiments, at least one of the plurality of disconnection portions Cp may include both the dielectric D and the pore P.

Additionally, at least one of the plurality of disconnection portions Cp has a length longer than a thickness of the internal electrode in the cross-section in the first direction, the bonding force between adjacent dielectric layers may be further improved.

Additionally, at least one of the plurality of disconnection portions Cp may be formed of the dielectric D. That is, as the disconnection portion Cp is entirely filled with the dielectric D, the bonding force between the dielectric layers 111a and 111b may be further improved, and the effect of suppressing the generation and propagation of the cracks may be further improved.

On the other hand, not all of the dielectrics D included in the disconnection portion Cp may be disposed in a form that connects the adjacent dielectric layers 111a and 111b, and some of the dielectric included in the disconnection portion Cp may be disposed in a form that is not connected to either the upper dielectric layer 111a or the lower dielectric layer 111b.

The pore P is an empty space that may be filled with air and is a region in which the bonding force is not formed.

Among the internal electrodes, a region excluding the disconnection portion Cp may be an electrode portion Ep, and the electrode portion Ep may be formed by sintering a conductive paste for internal electrodes.

In an example embodiment, the dielectric may include the same material as the dielectric layer. For example, the dielectric D and the dielectric layer 111 may include one or more selected from the group consisting of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), and (Ca₁₋ₓSrₓ)(Zr_{1-y}Ti_{y})O₃ (0<x<1, 0<y<1). In an example embodiment, the dielectric D and the dielectric layer 111 may include (Ca₁₋ₓSrₓ)(Zr_{1-y}Ti_{y})O₃ (0<x<1, 0<y<1) as a main component.

Additionally, the dielectric D may include any one or more selected from the group consisting of Ca, Mg, Mn, Al, and Si. Ca, Mg, Mn, Al and Si included in the internal electrode paste may be diffused during the sintering process and may be included in the dielectric.

Referring to FIG. 5, the porosity of the disconnection portion Cp may be defined as a ratio of a total length of the pore P to a total length of the disconnection portion Cp, and may be measured by scanning images obtained by cutting first and third directional cross-sections from the center of the body 110 in the second direction with a scanning electron microscope (SEM). After setting a certain region in the image, the total length of the internal electrode (a = e + g), the total length of the electrode portion Ep (e = e1 + e2 + e3 + e4 + e5), the total length of the disconnection portion Cp (g = g1 + g2 + g3 + g4) and the total length of the pore P (p = p1 + p2 +p3) may be calculated, so that (p/g)*100[%] may be used as the porosity of the disconnection portion Cp. And (p/a)*100[%] may be used as the porosity of the internal electrode.

Meanwhile, the porosity Dc of the disconnection portion in the central portion of the internal electrode in the third direction may be a value obtained by observing a region in which a third directional size of the internal electrode including a center of the body is 23 um, and the porosity Dm of the disconnection portion in the end of the internal electrode in the third direction may be a value obtained by observing a region in which the third directional size of the internal electrode including the ends of the internal electrode is 15 um. Referring to FIG. 3, Dc may be a value obtained by observing the scanned image in region K1, and Dm may be a value obtained by observing the scanned image in region K2.

Additionally, Dc may be more generalized by calculating the porosity of the disconnection portion for 7 or more internal electrodes in the central portion of the internal electrode in the third direction and then averaging values thereof, and Dm may also be generalized by calculating the porosity of the disconnection portion for 7 or more internal electrodes in the end of the internal electrode in the third direction and then averaging values thereof. That is, Dc may refer to an average porosity of the disconnection portion in the central portion of the internal electrode in the third direction, and Dm may refer to an average porosity of the disconnection portion in the end of the internal electrode in the third direction.

Meanwhile, a method of controlling an average porosity of the disconnection portion Cp is not particularly limited.

For example, the average porosity of the disconnection portion Cp may be controlled by a method of applying appropriate pressure to the body in a stacking direction in the sintering process. Additionally, the average porosity of the disconnection portion Cp may be controlled by adjusting a temperature increase rate, time, sintering atmosphere, and the like, in the sintering process. Additionally, the average porosity of the disconnection portion Cp may be controlled by adjusting the amount of conductive powder particles, organic materials, and ceramics added to the conductive paste for internal electrodes. Additionally, conductive powder particles of different sizes may be mixed and a ratio thereof may be adjusted, and printing conditions of the conductive paste may be changed to control the average porosity of the disconnection portion Cp.

For a specific example, when a sintering temperature is set to 1185°C or higher in an atmosphere with a hydrogen concentration of 0.2vol% and the thickness of the internal electrode is adjusted to be 1 µm or less, the average porosity of the disconnection portion Cp may be controlled to be satisfied. When controlling the sintering conditions described above, the formation of pores may be suppressed through micro-oxidation of the end of the internal electrodes.

The internal electrodes 121 and 122 may include first and second internal electrodes 121 and 122. The first and second internal electrodes 121 and 122 may be alternately disposed to face each other with the dielectric layer 111 included in the body 110 interposed therebetween, and may be exposed to the third and fourth surfaces 3 and 4 of the body 110, respectively.

The first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body and may be connected to the first internal electrode 121, and a second external electrode 132 may be disposed on the fourth surface 4 of the body and may be connected to the second internal electrode 122.

That is, the first internal electrode 121 is not connected to the second external electrode 132, but is connected to the first external electrode 131, and the second internal electrode 122 is not connected to the first external electrode 131 but is connected to the second external electrode 132. Accordingly, the first internal electrode 121 may be formed to be spaced apart from the fourth surface 4 by a certain distance, and the second internal electrode 122 may be formed to be spaced apart from the third surface 3 by a certain distance. Additionally, the first and second internal electrodes 121 and 122 may be disposed to be spaced apart from the fifth and sixth surfaces of the body 110.

The conductive metal included in the internal electrodes 121 and 122 may be one or more selected from the group consisting of Ni, Cu, Pd, Ag, Au, Pt, In, Sn, Al, Ti, and alloys thereof, and the present disclosure is not limited thereto. Additionally, in order to control the porosity of the disconnection portion, an appropriate amount of one or more selected from the group consisting of Ca, Mg, Mn, Al and Si may be included in the conductive paste for internal electrodes.

A method of forming the internal electrodes 121 and 122 is not particularly limited. For example, the internal electrodes 121 and 122 may be formed by applying a conductive paste for internal electrodes including a conductive metal on a ceramic green sheet and sintering the conductive paste. A method of applying the conductive paste for internal electrodes may use a screen printing method or a gravure printing method, but the present disclosure is not limited thereto.

An average thickness te of the internal electrode does not need to be particularly limited. In this case, the thickness of the internal electrodes 121 and 122 may refer to a first directional size of the internal electrodes 121 and 122. For example, when the average thickness te of the internal electrodes 121 and 122 is 1.0 um or less, the effect of suppressing the generation and propagation of cracks according to the present disclosure may be more remarkable.

Here, the average thickness te of the internal electrode may be measured by scanning first and second directional cross-sections of the body 110 with a scanning electron microscope (SEM) of 10,000X magnification. More specifically, an average value may be measured by measuring the thickness at multiple areas of one internal electrode 121 or 122, for example, at 30 areas which are spaced apart from each other at equal intervals in the second direction. The 30 areas with the equal intervals may be designated in the capacitance formation portion Ac. Additionally, when the average value is measured by extending the average value measurement up to 10 internal electrodes 121 and 122, an average thickness of the internal electrodes 121 and 122 may be further generalized.

The external electrodes 131 and 132 may be disposed on the body 110 and connected to the internal electrodes 121 and 122.

As illustrated in FIG. 2, first and second external electrodes 131 and 132 disposed on the third and fourth surfaces 3 and 4 of the body 110, respectively, and connected to the first and second internal electrodes 121 and 122 may be included.

In some example embodiments, a structure in which the multilayer electronic component 100 has two external electrodes 131 and 132 is described, but the number or shape of the external electrodes 131 and 132 may be changed depending on the shape of the internal electrodes 121 and 122 or other purposes.

Meanwhile, the external electrodes 131 and 132 may be formed using any material as long as the material has electrical conductivity, such as metals, and the specific material may be determined in consideration of electrical properties, structural stability, and the like, and further, the external electrodes 131 and 132 may have a multilayer structure.

For example, the external electrodes 131 and 132 may include electrode layers 131a and 132a disposed on the body 110 and plating layers 131b and 132b formed on the electrode layers 131a and 132a, respectively.

For more specific examples of the electrode layers 131a and 132a, the electrode layers 131a and 132a may be fired electrodes including conductive metal and glass, or may be resin-based electrodes including a conductive metal and a resin.

Additionally, the electrode layers 131a and 132a may be formed by sequentially forming a fired electrode and a resin-based electrode on the body. Additionally, the electrode layers 131a and 132a may be formed by transferring a sheet including conductive metal onto the body, or may be formed by transferring a sheet including a conductive metal onto the fired electrode.

As the conductive metal included in the electrode layers 131a and 132a, a material having excellent electrical conductivity may be used and is not particularly limited. For example, the conductive metal may be one or more selected from the group consisting of nickel (Ni), copper (Cu), and alloys thereof.

The plating layers 131b and 132b may serve to improve mounting characteristics. The types of plating layers 131b and 132b are not particularly limited, and the plating layers 131b and 132b may be plating layers including one or more selected from the group consisting of Ni, Sn, Pd, and alloys thereof, and may be formed of a plurality of layers.

For more specific examples of the plating layers 131b and 132b, the plating layers 131b and 132b may be Ni plating layers or Sn plating layers, and may be in the form in which the Ni plating layer and the Sn plating layer are sequentially formed on the electrode layers 131a and 132a, or may be in the form in which the Sn plating layer, the Ni plating layer, and the Sn plating layer are formed sequentially. Additionally, the plating layers 131b and 132b may include a plurality of Ni plating layers and/or a plurality of Sn plating layers.

### <Example>

In Table 1 below, the porosity Dc of the disconnection portion measured in the center in the third direction of the internal electrode of each sample obtained while changing the sintering conditions, the porosity Dm of the disconnection portion measured in the end of the internal electrode in the third direction, the porosity Ic of the internal electrode measured in the center of the internal electrode in the third direction, and the porosity Im of the internal electrode measured in the end of the internal electrode in the third direction were measured, respectively, and are shown, and a frequency of the generation of cracks in each sample was observed and are shown.

Dc, Dm, Ic and Im were measured by scanning images obtained by cutting the first and third directional cross-sections from the center of the body in the second direction with the scanning electron microscope (SEM), and an average value of values for each of 7 or more internal electrodes is described. Dc and Ic were values obtained by observing a region with a third directional size of 23 um in the central portion of the internal electrode in the third direction, and Dm and Im were values obtained by observing a region with a third directional size of 15 um in the end of the internal electrode in the third direction.

Here, referring to FIG. 5, the porosity of the internal electrode refers to the ratio of the total length (p= p1 + p2 +p3) of the pore P to the total length (a) of the internal electrode in the observation region.

The crack frequency was measured by preparing 100 sample chips for each sample number, and then observing 18 points per sample chip, 3 points each at an upper portion, a central portion and a lower portion in the first and third directional cross-sections cut from the center of the sample chip in the second direction, and listing a percentage of points in which the cracks are generated out of a total of 1,800 points for each sample number. The crack frequency was measured using an indenter (Nano Indentor) under the condition of an indentation strength of 0.2kgf.

**Table 1:**

| Sample Number | Porosity of Disconnection Portion | | | Porosity of Internal Electrode | | | Crack Frequency (%) |
|---|---|---|---|---|---|---|---|
| | Dc(%) | Dm (%) | Dm/Dc | Ic(%) | Im (%) | Im/Ic | |
| 1* | 58 | 46 | 0.79 | 4.61 | 13.3 | 2.89 | 54 |
| 2* | 39 | 41 | 1.05 | 3.47 | 12.16 | 3.50 | 72 |
| 3* | 64 | 64 | 1.00 | 7.59 | 22.47 | 2.96 | 69 |
| 4* | 49 | 62 | 1.27 | 13.84 | 19.47 | 1.41 | 87 |
| 5* | 39 | 45 | 1.15 | 15.06 | 14.09 | 0.94 | 79 |
| 6* | 50 | 54 | 1.08 | 17.15 | 20.27 | 1.18 | 74 |
| 7 | 27 | 11 | 0.41 | 2.53 | 4.46 | 1.76 | 39 |
| 8 | 34 | 9 | 0.26 | 2.73 | 3.49 | 1.28 | 25 |
| 9 | 35 | 15 | 0.43 | 3.46 | 5.82 | 1.68 | 41 |
| 10 | 37 | 19 | 0.51 | 3.44 | 9.24 | 2.69 | 49 |
| 11 | 43 | 19 | 0.44 | 4.3 | 5.25 | 1.22 | 42 |

It may be confirmed that sample numbers 1 to 6 have a high crack frequency with Dm/Dc of 0.79 or more.

On the other hand, it may be confirmed that sample numbers 7 to 11 have a low crack frequency with Dm/Dc of less than 0.79, and thus the generation and propagation of cracks is suppressed.

Additionally, in sample numbers 7 to 11, it may be confirmed that Dm is 40% or less and Dm<Dc is satisfied, and thus the crack frequency is low and the generation and propagation of cracks is suppressed.

Meanwhile, it may be confirmed that the porosity of the internal electrode does not have a significant correlation with the crack frequency, and it may be confirmed that the crack frequency is correlated with the porosity of the disconnection portion rather than the porosity of the internal electrode.

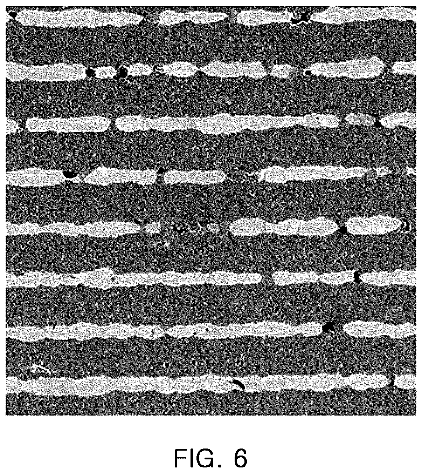

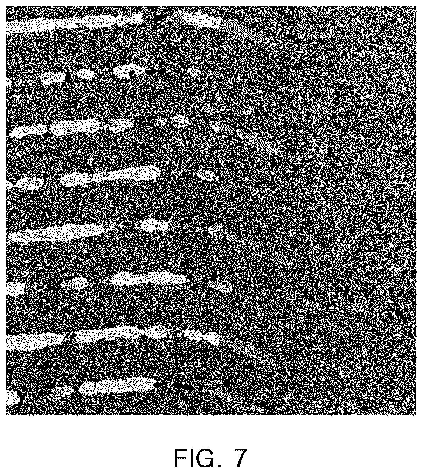

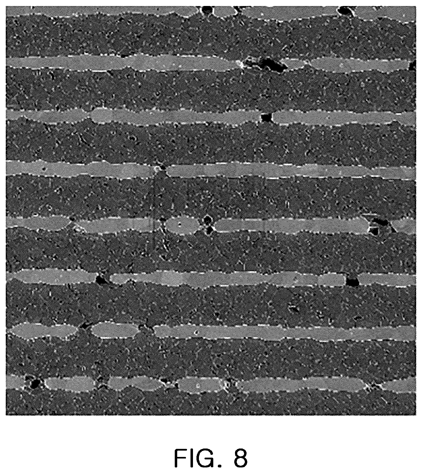

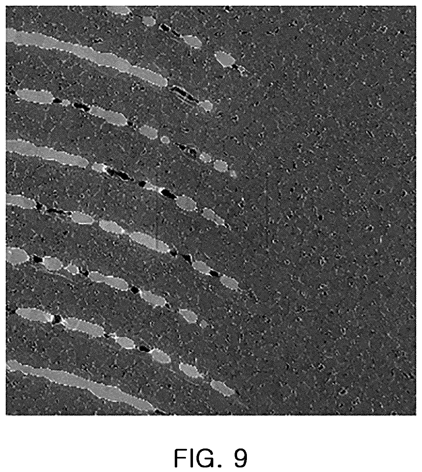

FIG. 6 is an image obtained by observing the central portion of the internal electrode in the third direction in an inventive example (sample number 7). FIG. 7 is an image obtained by observing the end of the internal electrode in the third direction in an inventive example (sample number 7). FIG. 8 is an image obtained by observing the central portion of the internal electrode in the third direction in a comparative example (sample number 1). FIG. 9 is an image obtained by observing the end of the internal electrode in the third direction in a comparative example (sample number 1).

Comparing FIGS. 6 and 8, there is no significant difference in the porosity of the disconnection region in the center of the internal electrode of the example and the comparative example. However, comparing FIGS. 7 and 9, in the case of the example, it may be confirmed that the porosity of the disconnection portion in the end of the internal electrode is significantly lower than that of the comparative example.

Although the example embodiments of the present disclosure have been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a dielectric layer and internal electrodes alternately disposed in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; and
an external electrode disposed on the body and connected to the internal electrode,
wherein the internal electrode includes a plurality of electrode portions and disconnection portions, and the disconnection portion includes at least one of a dielectric and a pore, and
when a ratio of a length of the pore to a length of the disconnection portion is a porosity of the disconnection portion, a porosity of the disconnection portion measured in a central portion of the internal electrode in the third direction, in cross-sections of the body in the first and third directions, is Dc, and a porosity of the disconnection portion measured in an end of the internal electrode in the third direction is Dm, Dm/Dc is less than 0.79.

2. The multilayer electronic component according to claim 1, wherein Dm/Dc is 0.51 or less.

3. The multilayer electronic component according to claim 1, wherein Dm/Dc is 0.26 or more and 0.51 or less.

4. The multilayer electronic component according to claim 1, wherein a third directional size of the central portion of the internal electrode in the third direction is 23 um, and a third directional size of the end of the internal electrode in the third direction is 15 µm.

5. The multilayer electronic component according to claim 1, wherein Dm is 40% or less.

6. The multilayer electronic component according to claim 1, wherein Dm is 19% or less.

7. The multilayer electronic component according to claim 1, wherein the disconnection portion is disposed to penetrate through the internal electrode in the first direction.

8. The multilayer electronic component according to claim 1, wherein the dielectric is disposed to connect dielectric layers adjacent to the disconnection portion.

9. The multilayer electronic component according to claim 1, wherein at least one of the plurality of disconnection portions includes both the dielectric and the pore.

10. The multilayer electronic component according to claim 1, wherein at least one of the plurality of disconnection portions is formed of the dielectric.

11. The multilayer electronic component according to claim 1, wherein the dielectric includes the same material as the dielectric layer.

12. The multilayer electronic component according to claim 1, wherein the dielectric includes one or more selected from the group consisting of Ca, Mg, Mn, Al, and Si.

13. The multilayer electronic component according to claim 1, wherein an average thickness of the internal electrode is 1 µm or less.

14. The multilayer electronic component according to claim 1, wherein the Dc is 43% or less.

15. The multilayer electronic component according to claim 1, wherein the Dc is 20% or more.
